# EUROPÄISCHE PATENTSCHRIFT

(11) **EP 3 288 886 B1**
(45) Veröffentlichungstag und Bekanntmachung des Hinweises auf die Patenterteilung: **25.11.2020**
(21) Anmeldenummer: 16719091.7
(22) Anmeldetag: 29.04.2016
(51) Int. Cl.: B66B 7/06, B66B 7/08

(54) **AUFZUGSANLAGE**
LIFT SYSTEM
INSTALLATION D'ASCENSEUR

(30) Priorität: 30.04.2015 EP 15166033
(43) Veröffentlichungstag der Anmeldung: 07.03.2018
(73) Patentinhaber: Inventio AG, 6052 Hergiswil (CH)
(72) Erfinder: DOLD, Florian, 6037 Root (CH)
(86) Internationale Anmeldenummer: PCT/EP2016/059578
(87) Internationale Veröffentlichungsnummer: WO 2016/174184

(56) Entgegenhaltungen:
- WO-A1-2014/083043
- US-A1- 2007 017 749
- US-A1- 2015 101 889

## Beschreibung

Gegenstand der Erfindung ist eine Aufzugsanlage und insbesondere eine Ausgestaltung einer Befestigung eines Tragmittels in der Aufzugsanlage.

Bei manchen Aufzugsanlagen werden riemenförmige Tragmittel eingesetzt. Solche Tragmittel umfassen im Allgemeinen mehrere aus Stahldrähten bestehende Zugträger, welche die von dem Tragmittel aufzunehmenden Zugkräfte aufnehmen. Die Zugträger sind im Allgemeinen von einem Mantel aus Kunststoff umgeben.

Solche Tragmittel sind innerhalb einer Aufzugsanlage ein sicherheitsrelevantes Bauteil. Aus diesem Grund werden Prüfeinheiten in Aufzugsanlagen eingesetzt, welche insbesondere den mechanischen Zustand der Zugträger überprüfen. Schäden an den die Kräfte aufnehmenden Zugträgern sollen dadurch frühzeitig erkannt werden können. Somit kann das Tragmittel bei einer Beschädigung ausgewechselt werden, um ein Versagen der Aufzugsanlage zu verhindern.

Die elektrisch leitenden Zugträger sind von dem elektrisch isolierenden Mantel aus Kunststoff umgeben. Zur Durchführung einer Prüfung des Zustandes der Zugträger werden üblicherweise die Zugträger elektrisch kontaktiert, und mit Hilfe eines durch die Zugträger geleiteten elektrischen Prüfstromes wird ein Zustand der Zugträger festgestellt. Dabei deuten Veränderungen, insbesondere eine Erhöhung des elektrischen Widerstandes der Zugträger, auf eine Verschlechterung eines Zustandes der Zugträger hin. Um die einzelnen Zugträger zuverlässig überprüfen zu können, ist es wichtig, dass die Zugträger untereinander nicht in elektrischem Kontakt miteinander stehen. Solche elektrischen Kurzschlüsse zwischen Zugträgern eines Tragmittels können beispielsweise an Stellen auftreten, an denen das Tragmittel eingeklemmt wird.

Aus dem Dokument US 2015/101889 A1 sind elektrisch nicht-leitende Tragmittelbefestigungsvorrichtungen bekannt.

Eine Aufgabe der vorliegenden Erfindung besteht darin, eine Aufzugsanlage zur Verfügung zu stellen, bei welcher zuverlässig verhindert wird, dass ummantelte Zugträger des Tragmittels untereinander elektrisch kurzgeschlossen sind. Die Aufzugsanlage soll zudem kostengünstig und einfach zu installieren sein.

Zur Lösung dieser Aufgabe wird eine Aufzugsanlage mit einer Kabine und einem Tragmittel vorgeschlagen. Dabei ist die Kabine vom Tragmittel zumindest teilweise getragen. Das Tragmittel umfasst mehrere parallel zueinander angeordnete elektrisch leitende Zugträger, welche im Wesentlichen von einem Mantel umhüllt sind. Das Tragmittel weist eine erste Seite und eine zweite Seite auf. Das Tragmittel ist an Tragmittelbefestigungsvorrichtungen befestigt, wobei die Tragmittelbefestigungsvorrichtungen jeweils ein Gehäuse und ein Klemmelement umfassen. Das Gehäuse und das Klemmelement weisen Klemmflächen auf, zwischen welchen das Tragmittel eingeklemmt ist. Dabei ist das Klemmelement und/oder das Gehäuse aus einem elektrisch isolierenden Material gebildet.

Eine solche Aufzugsanlage hat zunächst den Vorteil, dass herkömmliche Keilschlösser als Tragmittelbefestigungsvorrichtungen verwendet werden können. Dabei wird das metallische Klemmelement und/oder das metallische Gehäuse der herkömmlichen Tragmittelbefestigungsvorrichtung durch ein elektrisch isolierendes Gehäuse und/oder ein elektrisch isolierendes Klemmelement ersetzt. Dadurch wird sichergestellt, dass bei einem möglicherweise auftretenden Kontakt zwischen den Zugträgern und der Tragmittelbefestigungsvorrichtung keine elektrischen Brücken zwischen den Zugträgern entstehen, und dass keine Erdung der Zugträger über die Tragmittelbefestigungsvorrichtung erfolgt. Somit bleiben die Zugträger des Tragmittels elektrisch voneinander isoliert, auch wenn der Mantel auf einer Seite des Tragmittels durchgescheuert ist. Ein solches elektrisch isolierendes Klemmelement und/oder Gehäuse ist kostengünstig herzustellen und einfach in einer Aufzugsanlage zu installieren. Zudem können bestehende Aufzugsanalgen mit einem solchen elektrisch isolierenden Klemmelement und/oder Gehäuse einfach nachgerüstet werden.

In einem vorteilhaften Ausführungsbeispiel weist die erste Seite des Tragmittels eine erste Manteldicke zwischen den Zugträgern und einer ersten Oberfläche des Mantels auf, und die zweite Seite des Tragmittels weist eine zweite Manteldicke zwischen den Zugträgern und einer zweiten Oberfläche des Mantels auf, wobei die erste Manteldicke grösser ist als die zweite Manteldicke. Dabei ist die zweite Oberfläche an dem Klemmelement oder dem Gehäuse aus einem elektrisch isolierenden Material angeordnet. Eine derartige Anordnung ist vorteilhaft, weil beobachtet wurde, dass die dünner ausgestaltete Manteldicke auf der zweiten Seite des Tragmittels schneller durchscheuert als die grössere Manteldicke auf der ersten Seite des Tragmittels. Somit kann es in diesem Ausführungsbeispiel genügen, lediglich diejenige Seite des Tragmittels mit der geringeren Manteldicke von der Tragmittelbefestigungsvorrichtung elektrisch zu isolieren.

In einem vorteilhaften Ausführungsbeispiel ist die erste Seite des Tragmittels eine Traktionsseite, welche in Kontakt steht mit einer Treibscheibe eines Antriebes. Die zweite Seite des Tragmittels ist eine Rückseite, wobei diese zweite Seite an dem Klemmelement angeordnet ist. Dabei ist das Klemmelement aus einem elektrisch isolierenden Material ausgebildet. Eine derartige Anordnung ist vorteilhaft, weil beobachtet wurde, dass der in der Regel dünner ausgestaltete Mantel auf der Rückseite des Tragmittels schneller durchscheuert als der in der Regel dicker ausgestaltete Mantel auf der Traktionsseite des Tragmittels. Somit kann es in diesem Ausführungsbeispiel genügen, lediglich eine Seite des Tragmittels von der Tragmittelbefestigungsvorrichtung elektrisch zu isolieren.

In einem weiteren vorteilhaften Ausführungsbeispiel ist sowohl das Gehäuse als auch das Klemmelement aus einem elektrisch isolierenden Material gebildet. Eine solche Anordnung ist vorteilhaft, wenn zu erwarten ist, dass entweder der Mantel auf der Rückseite des Tragmittels oder der Mantel auf der Traktionsseite des Tragmittels im Gebrauch geschädigt werden könnte.

In einer vorteilhaften Ausführungsform ist auf der Traktionsseite des Tragmittels ein Profilierung, beispielsweise in Form von Längsrippen, ausgebildet. Solche Längsrippen haben den Vorteil, dass eine Traktion zwischen dem Tragmittel und einer Treibscheibe erhöht ist, und dass zudem ein Durchscheuern des Mantels auf der Traktionsseite bis auf die Zugträger wirksam verhindert wird.

Das elektrisch isolierende Material kann aus verschiedenen Werkstoffen ausgebildet sein. Es kann beispielsweise aus einem nicht-metallischen Werkstoff ausgebildet sein, was den Vorteil hat, dass keine elektrischer Kurzschluss über das Klemmelement bzw. das Gehäuse zwischen zwei Zugträgern erfolgen kann.

In einem alternativen Ausführungsbeispiel ist das elektrisch isolierende Material aus Keramik gebildet, was den Vorteil hat, dass dadurch ein thermisch und chemisch stabiles Element gebildet werden kann.

In einem weiteren alternativen Ausführungsbeispiel ist das elektrisch isolierende Material aus einem Kunststoff gebildet, was den Vorteil hat, dass dadurch eine vorteilhafte Pressungsverteilung auf die Zugträger erreicht werden kann.

In einem weiteren alternativen Ausführungsbeispiel ist das elektrisch isolierende Material aus Holz bzw. imprägniertem Holz ausgebildet, was den Vorteil hat, dass dadurch ein nachwachsender, biologisch abbaubarer Rohstoff verwendet werden kann.

Wesentlich bei diesen Ausführungsvarianten des elektrisch isolierenden Materials ist es, dass die Zugträger wirksam voneinander elektrisch isoliert sind im Falle eines defekten Mantels des Tragmittels in der Tragmittelbefestigungsvorrichtung.

In einem vorteilhaften Ausführungsbeispiel ist das Klemmelement als Keil ausgebildet. In einem alternativen Ausführungsbeispiel ist das Klemmelement andersförmig ausgebildet, beispielsweise mit einem kreisförmigen, ovalen, vieleckigen, oder unregelmässig geformten Querschnitt. Das Klemmelement muss dabei nicht zwingend als Körper mit konstantem Querschnitt ausgebildet sein, es kommen auch andersförmige Körper als Klemmelemente in Frage.

In einem vorteilhaften Ausführungsbeispiel ist das Klemmelement und/oder das Gehäuse einstückig ausgebildet. Dies hat den Vorteil, dass dadurch eine dauerhaft elektrisch isolierende Wirkung dieser Komponenten sichergestellt werden kann.

Einzelheiten und Vorteile der Erfindung werden im Folgenden anhand von Ausführungsbeispielen und mit Bezug auf die schematischen Zeichnungen beschrieben.

Es zeigen:
- Figur 1: eine beispielhafte Ausführungsform einer Aufzugsanlage;
- Figur 2: eine beispielhafte Ausführungsform einer Tragmittelbefestigungsvorrichtung;
- Figur 3a: eine beispielhafte Ausführungsform eines Gehäuses einer Tragmittelbefestigungsvorrichtung;
- Figur 3b: eine beispielhafte Ausführungsform eines Klemmelementes einer Tragmittelbefestigungsvorrichtung; und
- Figur 4: eine beispielhafte Ausführungsform eines Tragmittels.

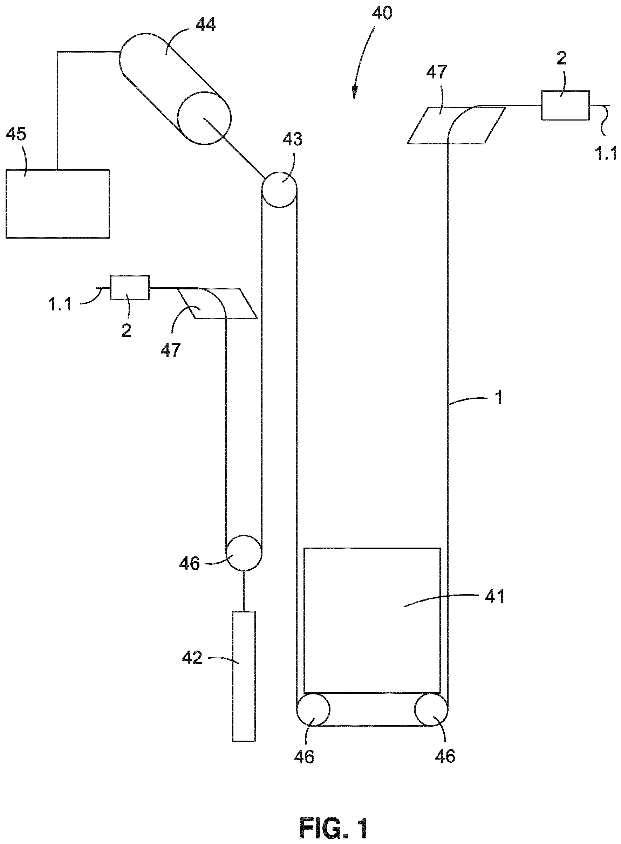

Die in Figur 1 schematisch und beispielhaft dargestellte Aufzugsanlage 40 beinhaltet eine Aufzugskabine 41, ein Gegengewicht 42 und ein Tragmittel 1 sowie eine Treibscheibe 43 mit zugeordnetem Antriebsmotor 44. Die Treibscheibe 43 treibt das Tragmittel 1 an und bewegt damit die Aufzugskabine 41 und das Gegengewicht 42 gegengleich. Der Antriebsmotor 44 ist von einer Aufzugssteuerung 45 gesteuert. Die Kabine 41 ist gestaltet, um Personen und/oder Güter aufzunehmen und zwischen Etagen eines Gebäudes zu transportieren. Kabine 41 und Gegengewicht 42 sind entlang von Führungen geführt (nicht dargestellt). Im Beispiel sind die Kabine 41 und das Gegengewicht 42 jeweils an Tragrollen 46 aufgehängt. Das Tragmittel 1 ist dabei an einer ersten Tragmittelbefestigungsvorrichtung 47 festgemacht, und dann zunächst um die Tragrolle 46 des Gegengewichts 42 geführt. Sodann ist das Tragmittel 1 über die Treibscheibe 43 gelegt, um die Tragrolle 46 der Kabine 41 geführt und schliesslich durch eine zweite Tragmittelbefestigungsvorrichtung 47 mit einem Fixpunkt verbunden. Dies bedeutet, dass das Tragmittel 1 mit einer entsprechend einem Umhängefaktor höheren Geschwindigkeit über den Antrieb 43, 44 läuft, als sich Kabine 41 bzw. Gegengewicht 42 bewegen. Im Beispiel beträgt der Umhängefaktor 2:1.

Ein loses Ende 1.1 des Tragmittels 1 ist mit einer Kontaktierungsvorrichtung 2 zur temporären oder permanenten Kontaktierung und Überwachung des Tragmittels 1 versehen. Im dargestellten Beispiel ist an beiden Enden des Tragmittels 1 eine derartige Kontaktierungsvorrichtung 2 angeordnet. In einer alternativen nicht dargestellten Ausführungsform ist nur eine Kontaktierungsvorrichtung 2 an einem der Tragmittelenden 1.1 angeordnet. Die Tragmittelenden 1.1 sind von der Zugkraft im Tragmittel 1 nicht mehr belastet, da diese Zugkraft bereits vorgängig über die

Tragmittelbefestigungsvorrichtungen 47 in das Gebäude geleitet ist.
Die Kontaktierungsvorrichtungen 2 sind also in einem nicht überrollten Bereich des Tragmittels 1 und ausserhalb des belasteten Bereichs des Tragmittels 1 angeordnet.

Die gezeigte Aufzugsanlage 40 in Figur 1 ist beispielhaft. Andere Umhängefaktoren und Anordnungen, wie beispielsweise Aufzugsanlagen ohne Gegengewicht, sind möglich. Die Kontaktierungsvorrichtung 2 zur Kontaktierung des Tragmittels 1 wird dann entsprechend der Platzierung der Tragmittelbefestigungsvorrichtungen 47 angeordnet.

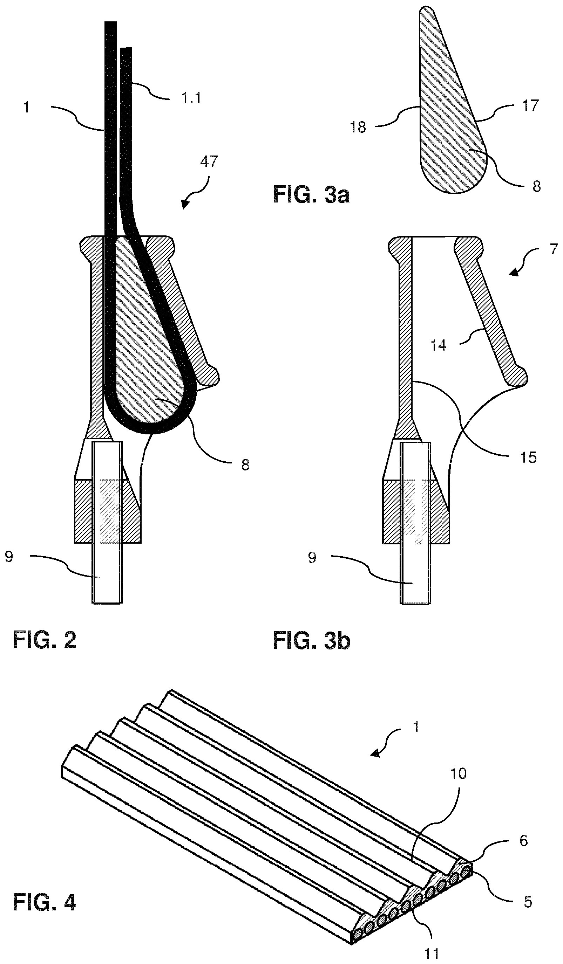

In Figur 2 ist eine beispielhafte Ausführungsform einer Tragmittelbefestigungsvorrichtung 47 mit darin eingelegtem Tragmittel 1 dargestellt. Die Tragmittelbefestigungsvorrichtung 47 umfasst ein Gehäuse und ein darin angeordnetes Klemmelement 8. Das Gehäuse ist über eine Gewindestange 9 an einem Element in der Aufzugsanlage befestigt. Die Tragmittelbefestigungsvorrichtung 47 kann über die Gewindestange 9 beispielsweise mit einer Kabine, einem Gegengewicht oder einem Träger verbunden sein.

Das in der Tragmittelbefestigungsvorrichtung 47 eingelegte Tragmittel 1 weist eine belastete Seite und ein loses Tragmittelende 1.1 auf. Das Tragmittel 1 ist in der Tragmittelbefestigungsvorrichtung 47 von Klemmflächen des Klemmelementes 8 und des Gehäuses eingeklemmt.

Um zumindest eine Seite des Tragmittels 1 gegenüber den Klemmflächen des Klemmelements 8 bzw. dem Gehäuse elektrisch zu isolieren, ist das Klemmelement 8 und/oder das Gehäuse aus einem elektrisch isolierenden Material, wie beispielsweise Keramik, ausgebildet.

In den Figuren 3a und 3b ist ein Klemmelement 8 und ein Gehäuse 7 dargestellt. In einem Verwendungszustand ist das Tragmittel zwischen Klemmflächen 17, 18 des Klemmelementes 8 und Klemmflächen 14, 15 des Gehäuses 7 eingeklemmt. Um zumindest eine Seite des Tragmittels gegenüber den Klemmflächen 17, 18 des Klemmelements 8 bzw. den Klemmflächen 14, 15 des Gehäuses 7 elektrisch zu isolieren, ist das Klemmelement 8 und/oder das Gehäuse 7 aus einem elektrisch isolierenden Material wie beispielsweise Keramik ausgebildet.

In den Figuren 3a und 3b sind sowohl das Gehäuse 7 als auch das Klemmelement 8 einstückig ausgebildet.

In Figur 4 ist eine beispielhafte Ausführungsform eines Tragmittels 1 dargestellt. Das Tragmittel 1 umfasst mehrere parallel zueinander angeordnete elektrisch leitende Zugträger 5, welche von einem Mantel 6 umhüllt sind. Das Tragmittel 1 hat eine erste Seite 10 und eine zweite Seite 11. Dabei ist die erste Seite 10 des Tragmittels 1 als Traktionsseite ausgebildet, welche in Kontakt steht mit einer Treibscheibe eines Antriebes. Die zweite Seite 11 des Tragmittels 1 ist als Rückseite ausgebildet. In diesem Ausführungsbeispiel umfasst die Traktionsseite 10 Längsrippen. Solche Längsrippen dienen einerseits der verbesserten Traktion des Tragmittels 1 auf der Treibscheibe, und andererseits dem erhöhten Schutz der Zugträger 5.

## Patentansprüche

1. Aufzugsanlage mit einer Kabine (41) und einem Tragmittel (1), wobei die Kabine (41) vom Tragmittel (1) zumindest teilweise getragen ist, und wobei das Tragmittel (1) mehrere parallel zueinander angeordnete elektrisch leitende Zugträger (5) umfasst, welche im Wesentlichen von einem Mantel (6) umhüllt sind, und wobei das Tragmittel (1) eine erste Seite (10) und eine zweite Seite (11) aufweist, und wobei das Tragmittel (1) an Tragmittelbefestigungsvorrichtungen (47) befestigt ist, und wobei die Tragmittelbefestigungsvorrichtungen (47) jeweils ein Gehäuse (7) und ein Klemmelement (8) umfassen, und wobei das Gehäuse (7) und das Klemmelement (8) Klemmflächen (14, 15, 17, 18) aufweisen, zwischen welchen das Tragmittel (1) eingeklemmt ist, wobei das Klemmelement (8) und/oder das Gehäuse (7) aus einem elektrisch isolierenden Material (3) gebildet ist,
**dadurch gekennzeichnet, dass** das Klemmelement (8) aus Keramik oder Holz und/oder das Gehäuse (7) aus Keramik oder Holz gebildet ist.

2. Aufzugsanlage nach Anspruch 1, wobei die erste Seite (10) des Tragmittels (1) eine erste Manteldicke zwischen den Zugträgern (5) und einer ersten Oberfläche des Mantels (6) aufweist, und wobei die zweite Seite (11) des Tragmittels (1) eine zweite Manteldicke zwischen den Zugträgern (5) und einer zweiten Oberfläche des Mantels (6)aufweist, wobei die erste Manteldicke grösser ist als die zweite Manteldicke, und wobei die zweite Oberfläche an dem Klemmelement (8) oder dem Gehäuse (7) aus einem elektrisch isolierenden Material (3) angeordnet ist.

3. Aufzugsanlage nach Anspruch 2, wobei die erste Seite (10) des Tragmittels (1) eine Traktionsseite ist, welche in Kontakt steht mit einer Treibscheibe (43) eines Antriebes, und wobei die zweite Seite (11) des Tragmittels (1) eine Rückseite ist, wobei die zweite Seite (11) des Tragmittels (1) an dem Klemmelement (8) angeordnet ist, und wobei das Klemmelement (8) aus einem elektrisch isolierenden Material (3) gebildet ist.

4. Aufzugsanlage nach Anspruch 3, wobei auf der Traktionsseite (10) des Tragmittels (1) Längsrippen ausgebildet sind.

5. Aufzugsanlage nach einem der vorhergehenden Ansprüche, wobei das Klemmelement (8) und/oder das Gehäuse (7) aus einem nicht-metallischen Werkstoff gebildet ist.

6. Aufzugsanlage nach einem der vorhergehenden Ansprüche, wobei das Klemmelement (8) und/oder das Gehäuse (7) aus einem Kunststoff gebildet ist.

7. Aufzugsanlage nach einem der vorhergehenden Ansprüche, wobei das Klemmelement (8) und/oder das Gehäuse (7) aus imprägniertem Holz gebildet ist.

8. Aufzugsanlage nach einem der vorhergehenden Ansprüche, wobei das Klemmelement (8) als Keil ausgebildet ist.

9. Aufzugsanlage nach einem der vorhergehenden Ansprüche, wobei das Klemmelement (8) und/oder das Gehäuse (7) einstückig ausgebildet ist.

## Claims

1. Elevator system having a cab (41) and a suspension means (1), wherein the cab (41) is at least partially carried by the suspension means (1), and wherein the suspension means (1) comprises a plurality of electrically conductive tension members (5) that are arranged parallel to one another and are substantially enclosed by a jacket (6), and wherein the suspension means (1) has a first side (10) and a second side (11), and wherein the suspension means (1) is attached to suspension means mounting devices (47), and wherein the suspension means mounting devices (47) each comprise a housing (7) and a clamping element (8), and wherein the housing (7) and the clamping element (8) have clamping surfaces (14, 15, 17, 18) between which the suspension means (1) is clamped, wherein the clamping element (8) and/or the housing (7) is made of an electrically insulating material (3), **characterized in that** the clamping element (8) is made of ceramic or wood and/or the housing (7) is made of ceramic or wood.

2. Elevator system according to claim 1, wherein the first side (10) of the suspension means (1) has a first jacket thickness between the tension members (5) and a first surface of the jacket (6), and wherein the second side (11) of the suspension means (1) has a second jacket thickness between the tension members (5) and a second surface of the jacket (6), wherein the first jacket thickness is greater than the second jacket thickness, and wherein the second surface is arranged on the clamping element (8) or the housing (7) made of an electrically insulating material (3).

3. Elevator system according to claim 2, wherein the first side (10) of the suspension means (1) is a traction side that is in contact with a traction sheave (43) of a drive, and wherein the second side (11) of the suspension means (1) is a back side, wherein the second side (11) of the suspension means (1) is arranged on the clamping element (8), and wherein the clamping element (8) is made of an electrically insulating material (3).

4. Elevator system according to claim 3, wherein longitudinal ribs are embodied on the traction side (10) of the suspension means (1).

5. Elevator system according to any of the preceding claims, wherein the clamping element (8) and/or the housing (7) is made of a non-metal material.

6. Elevator system according to any of the preceding claims, wherein the clamping element (8) and/or the housing (7) is made of a plastics material.

7. Elevator system according to any of the preceding claims, wherein the clamping element (8) and/or the housing (7) is made of impregnated wood.

8. Elevator system according to any of the preceding claims, wherein the clamping element (8) is embodied as a wedge.

9. Elevator system according to any of the preceding claims, wherein the clamping element (8) and/or the housing (7) is a single piece.

## Revendications

1. Installation d'ascenseur comportant une cabine (41) et un moyen de suspension (1), la cabine (41) étant au moins partiellement suspendue au moyen de suspension (1), et le moyen de suspension (1) comprenant plusieurs tirants électriquement conducteurs (5), disposés parallèlement les uns aux autres et gainés sensiblement par une enveloppe (6), et le moyen de suspension (1) présentant un premier côté (10) et un second côté (11), et le moyen de suspension (1) étant fixé à des dispositifs de fixation de moyen de suspension (47), et les dispositifs de fixation de moyen de suspension (47) comprenant chacun un boîtier (7) et un élément de serrage (8), et le boîtier (7) et l'élément de serrage (8) présentant des surfaces de serrage (14, 15, 17, 18) entre lesquelles est serré le moyen de suspension (1), l'élément de serrage (8) et/ou le boîtier (7) étant formés d'un matériau électroisolant (3),
**caractérisée en ce que** l'élément de serrage (8) est formé en céramique ou en bois et/ou **en ce que** le boîtier (7) est formé en céramique ou en bois.

2. Installation d'ascenseur selon la revendication 1, le premier côté (10) du moyen de suspension (1) présentant une première épaisseur d'enveloppe entre les tirants (5) et une première surface de l'enveloppe (6), et le second côté (11) du moyen de suspension (1) présentant une seconde épaisseur d'enveloppe entre les tirants (5) et une seconde surface de l'enveloppe (6), la première épaisseur d'enveloppe étant supérieure à la seconde épaisseur d'enveloppe, et la seconde surface étant disposée sur l'élément de serrage (8) ou sur le boîtier (7) en matériau électroisolant (3).

3. Installation d'ascenseur selon la revendication 2, le premier côté (10) du moyen de suspension (1) étant un côté de traction qui est en contact avec une poulie motrice (43) d'un entraînement, et le second côté (11) du moyen de suspension (1) étant un côté arrière, le second côté (11) du moyen de suspension (1) étant disposé sur l'élément de serrage (8), et l'élément de serrage (8) étant formé d'un matériau électroisolant (3).

4. Installation d'ascenseur selon la revendication 3, des nervures longitudinales étant réalisées sur le côté de traction (10) du moyen de suspension (1).

5. Installation d'ascenseur selon l'une des revendications précédentes, l'élément de serrage (8) et/ou le boîtier (7) étant formés d'une matière non métallique.

6. Installation d'ascenseur selon l'une des revendications précédentes, l'élément de serrage (8) et/ou le boîtier (7) étant formés d'une matière plastique.

7. Installation d'ascenseur selon l'une des revendications précédentes, l'élément de serrage (8) et/ou le boîtier (7) étant formés de bois imprégné.

8. Installation d'ascenseur selon l'une des revendications précédentes, l'élément de serrage (8) étant réalisé sous forme de cale.

9. Installation d'ascenseur selon l'une des revendications précédentes, l'élément de serrage (8) et/ou le boîtier (7) étant réalisés d'une seule pièce.
